# EUROPÄISCHE PATENTANMELDUNG

(11) **EP 1 247 900 A2**
(43) Veröffentlichungstag der Anmeldung: **09.10.2002**
(21) Anmeldenummer: 02015122.1
(22) Anmeldetag: 21.02.1998
(51) Int. Cl.: E01B 11/50, B23K 9/00

(54) **Verfahren zum Verschweissen von Schienen für Schienenfahrzeuge**

(30) Priorität: 21.02.1997 US 802935; 15.10.1997 US 950408
(62) Teilanmeldung aus: 98103093.5
(71) Anmelder: THE LINCOLN ELECTRIC COMPANY, Cleveland, Ohio 44117-1199 (US)
(72) Erfinder: Morlock, Michael J., Chesterland, Ohio 44026 (US)
(74) Vertreter: Althaus, Arndt, Dipl.-Ing.

(57) **Zusammenfassung**

Die Erfindung betrifft ein Verfahren zum Verschweißen von Schienen für Schienenfahrzeuge im Bereich der Schienenkopfteile, die an den Schienen oberhalb von aufragenden Stegen 50 und darunterliegenden Sockelteilen ausgebildet sind, wobei die Schienen im Abstand voneinander unter Bildung eines Spaltes g zwischen ihren Stirnflächen eingebaut sind. Nach dem Ausfüllen des Spaltes g im Sockel- und im Stegbereich wird der Spalt im Kopfbereich geschlossen, indem die Elektrode 260 kontinuierlich nacheinander in entgegengesetzten Richtungen quer zur Längsrichtung der Schienen im Spalt zur Bildung von Schweißraupen WB bewegt wird, deren Anfangs- und Endpunkte S bzw. E die beiden entgegengesetzten Richtungen definieren, wobei die Bewegung der Elektrode am Anfangspunkt einer jeden Schweißraupe WB1 für einen bestimmten Haltezeitraum unterbrochen wird. Die Schweißraupen werden im Spalt zwischen den Kopfteilen der Schienen von deren beiden Seiten her entgegengesetzt nach innen geschweißt, wobei sie an den Schienenaußenseiten ein Stück weit über diese hervorragen und dicker sind als an den Schweißnahtendpunkten. Hierdurch wird eine Schweißnahtverstärkung im Kopfbereich erreicht, so daß es auch an diesem hochbelasteten Schienenteil nicht zu Materialausfällen kommt.

## Beschreibung

Die Erfindung betrifft ein Verfahren zum Verschweißen der im Abstand voneinander liegenden Enden von Schienen und liegt mehr im einzelnen auf dem Gebiet des Verschweißens von Schienen für Schienenfahrzeuge im Bereich der Schienenkopfteile, die an den Schienen oberhalb von aufragenden Stegen und darunterliegenden Sockelteilen ausgebildet sind, wobei die Schienen im Abstand voneinander unter Bildung eines Spaltes zwischen ihren Stirnflächen eingebaut sind, nach dem Oberbegriff von Anspruch 1.

In der Vergangenheit sind enorme Anstrengungen unternommen worden, um im Abstand voneinander liegende Eisenbahnschienen durch geeignete Stumpfschweißverfahren od.dgl. miteinander zu verbinden. Diese Anstrengungen haben zwar enorme Kosten verursacht, sind jedoch wenig erfolgreich gewesen, da die angewendeten Verfahren nur beschränkt geeignet waren, die Zeit und die Kosten zur Durchführung der Schweißverfahren zu groß waren und/oder keine dauerhaft haltbaren Schweißverbindungen erzeugt werden konnten.

Aus der US 3 192 356 ist ein Schweißverfahren mit verdecktem Lichtbogen bekannt, das gegenüber zuvor bekannten Gaspreßschweißtechniken und elektrischen Abbrennstumpfschweißverfahren Vorteile bieten soll. In den US 3 308 266 und 4 429 207 wird ein weit verbreitetes Elektrolichtbogenschweißverfahren beschrieben, wobei dieses Elektroschlackeschweißen angewendet wird, um die Spalte zwischen aufeinanderfolgenden Eisenbahnschienen an deren Einbauort auszufüllen. Bei diesem Verfahren wird der Spalt zwischen den Schienen mit einem Schweißbad aus geschmolzenem Metall ausgefüllt, das mit nicht erwünschter Schweißschlacke überdeckt ist. Um zu verhindern, daß ein Großteil des geschmolzenen Metalls aus dem Spalt zwischen den Schienen herausläuft, sind seitliche Verschalungen und ein Bodenelement vorgesehen, die zur Folge haben, daß das zwischen den Schienen in den Spalt eingebrachte Metall sowohl unterhalb als auch seitlich der Schienen im Spaltbereich vorspringt. Diese Druckschriften beschreiben ein modifiziertes Elektroschlackeschweißen, das an der Baustrecke des Gleises verwendet werden kann, wo die Schienen nicht umgedreht werden können, um sie normal zu verschweißen. Die Vorteile des Elektroschlackeschweißens gegenüber dem ebenfalls bekannten und heute weit verbreiteten Thermitschweißverfahren werden in den genannten Druckschriften beschrieben. Folgt man diesen Beschreibungen, weisen die bis dahin bekannten Schweißverfahren, einschließlich dem Thermitschweißverfahren, ganz erhebliche Nachteile auf, von denen bekannt ist, daß sie zu einer großen Anzahl von Schäden geführt haben. Diese Patente werden hier lediglich als allgemeiner Hintergrund zum Stand der Technik angegeben, da sie das Elektroschlackeschweißen von Schienen beschreiben, auch wenn dieses Verfahren mittlerweile aufgegeben wurde, da es viele Unzulänglichkeiten aufweist und nicht geeignet ist, am Einbauort der Schiene gleichmäßige und haltbare Schweißnähte zu erzeugen. Vielmehr führt dieses Verfahren zu sehr großen Mengen geschmolzenen Metalls, was an der Baustrecke des Gleises Probleme mit sich bringen kann.

Angeblich vorteilhaft gegenüber dem Elektroschlackeverfahren ist ein kombiniertes Elektroschlacke- und Schutzgasschweißverfahren, wie es in der US 5 175 405 beschrieben wird. Dieses Patent beschreibt ein automatisches Schweißverfahren zum stumpfen Verschweißen der Stirnseiten zweier voneinander beabstandeter Eisenbahnschienen, wobei ein Schutzgasschweißverfahren mit einem Elektroschlackeverfahren kombiniert wird. Auch in dieser Druckschrift werden die Nachteile der normalerweise verwendeten Termitschweißtechnik und die früheren Versuche mit Unterpulver-Lichtbogenschweißverfahren beschrieben. Wie dies bereits angedeutet wurde, ist die Ausfallziffer von Verbindungen, die im Thermitschweißverfahren hergestellt werden, sehr hoch; aufgrund der Schnelligkeit, mit der Schienen im Thermitverfahren verschweißt werden können, dessen Wirtschaftlichkeit und in Ermangelung eines erfolgreichen Lichtbogenschweißverfahrens werden Schienen jedoch bis heute im Thermitschweißverfahren direkt an der Baustelle des Gleiskörpers miteinander verschweißt. Ein Nachteil des kontinuierlichen Lichtbogenschweißens, wie es in der US 5 175 405 beschrieben wird, besteht darin, daß der Lichtbogen kaum gestartet werden kann, es jedoch erforderlich ist, den Lichtbogen beim Schweißen immer wieder neu zu starten und aufhören zu lassen. Um diese Nachteile zu vermeiden, wird mit dieser Druckschrift vorgeschlagen, im Sockelbereich des Spaltes zwischen den Schienen ein Unterpulver-Schweißverfahren zu verwenden, um den Start des Schweißens zu erzwingen und nachfolgend ein kontinuierliches Lichtbogenschweißen zu ermöglichen. Die US 5 175 405 wird hier als technologischer Hintergrund erwähnt, da darin die Nachteile des Thermitschweißverfahrens, die Schweißtechnik mit Dauerbrandlichtbogen und das Unterpulverschweißen beschrieben sind, von welchen Schweißverfahren sich keines als erfolgreich in der Praxis erwiesen hat. Die durch diese Druckschrift vorgeschlagene Lösung, ein Schutzgasschweißverfahren mit dem Elektroschlackeschweißen zu kombinieren, wobei die Schutzgastechnik im unteren Bereich des Spaltes zur Anwendung kommt, um dort die Nachteile des bis dahin versuchten, reinen Elektroschlackeschweißens zu vermeiden, hat sich in der Praxis am Einbauort der Schienen als nicht erfolgreich erwiesen, da es auch mit diesem Verfahren nicht möglich ist, eine erste Schicht Elektrodenmetall am Boden des Spaltes sauber einzubringen.

Aus der US 5 605 283 ist es bekannt, Eisenbahnschienen untereinander mit mehreren Schweißraupen zu verbinden, die quer zur Längsrichtung der Schienen verlaufen. Die Schweißraupen steigen vom Sockelteil der Schienen zu deren Kopfstücken parallel in Querrichtung und in Längsrichtung überlappend an und werden unter Inert-Schutzgas gelegt. Drei Bereiche der Schienen, nämlich deren Sockel, Steg und ihr Kopfteil werden getrennt und nacheinander miteinander verschweißt, so daß es verfahrensgemäß möglich ist, in den verschiedenen Schweißzonen verschiedene Elektrodenmaterialien einzusetzen. Dieses Schweißverfahren macht es erforderlich, das Schweißen zwischen den aufeinanderfolgenden Schweißbereichen zu unterbrechen und ist daher sehr zeitaufwendig und teuer.

Alle in den genannten Druckschriften zum Stand der Technik beschriebenen Schweißverfahren konnten sich nicht erfolgreich durchsetzen. Demgemäß ist das Thermitschweißverfahren trotz seiner großen Nachteile das nach wie vor am weitesten verbreitete Verfahren, um den Spalt zwischen zwei benachbarten Schienen mit geschmolzenem Metall auszufüllen und die Schienen so an ihrem Einbauort miteinander zu verbinden.

Beim Einbau und der Reparatur von Schienen für Schienenfahrzeuge müssen die Schienen an ihren stirnseitigen Enden häufig miteinander verbunden werden, während das Gleis in Betrieb ist oder an der Baustrecke eingebaut wird. Dabei soll eine Verbindung zwischen den Schienen geschaffen werden, die eine hohe Festigkeit hat, deren metallurgische Eigenschaften eingestellt bzw. festgelegt werden können, die keine Risse bekommt und die in sehr kurzer Zeit wirtschaftlich herstellbar ist. Nach einem Anforderungspunkt für einen solchen Schweißprozeß muß die Schweißverbindung in deutlich unter 45 min. herstellbar sein, da es sonst zu Verspätungen oder Umleitungen des Schienenverkehrs kommt. Derzeit werden zwei Verfahren angewendet, um Schienen an ihrem Einbauort miteinander zu verbinden. Das erste Verfahren ist das sogenannte Thermitschweißverfahren, bei dem die im Abstand voneinander liegenden Schienen mit einer geeigneten Sandform eingeformt werden und geschmolzener Stahl in die Form gegossen wird, der den Spalt zwischen den beiden benachbarten Schienen ausfüllt. Wenn sich das geschmolzene Metall wieder verfestigt, sind die Schienen miteinander verbunden. Unglücklicherweise führt dieses allgemein angewendete Verfahren zu sehr hohen Ausfallziffern, die bis zu 75% aller Verbindungsstellen betreffen. Bei diesem Verfahren müssen nämlich auch die Schienen selbst von dem geschmolzenen, in den Spalt zwischen den Schienen eingegossenen Stahl angeschmolzen werden, was nicht immer geschieht und so zu den hohen Ausfallzahlen bei den am Einbauort hergestellten Verbindungen führt.

Um die Nachteile des weit verbreiteten Thermitverfahrens deutlich zu verringern, bei dem Stahl in die Spalte zwischen den Schienen gegossen wird, können die Schienenenden miteinander im Abbrennschweißverfahren verbunden werden, wobei die Stirnseiten der Schienen unter sehr hohen Kräften gegeneinandergepreßt werden, während Strom durch die Schienen geleitet wird. Dadurch schmelzen die stirnseitigen Enden der Schienen an und verschweißen miteinander. Mit diesem Verfahren wird die Ausfallquote der Verbindungen auf unter 10% reduziert. Jedoch wird das Abbrennschweißen am besten bei Schienen in der Fabrik angewendet, wo die Schienen nicht an Schwellen befestigt sind und mit Hilfe von fest installierten hydraulischen Maschinen gegeneinandergepreßt werden können. Um den Nachteil des üblicherweise angewendeten Thermitverfahrens zu vermeiden, ist das Abbrennschweißverfahren zur Verwendung am Einbauort der Schienen modifiziert worden. Jedoch ist der Zeitaufwand für dieses Schweißverfahren deutlich höher als der für das Thermitschweißen, da die Schienen zum Aufbringen des hydraulischen Druckes eingespannt werden müssen, was es erforderlich macht, zumindest eine der beiden miteinander zu verbindenden Schienen von den Schwellen zu lösen. Dieser Arbeitsschritt wird von Hand durchgeführt und nach dem Verschweißen muß die sichere Verbindung zwischen Schiene und Schwellen wieder hergestellt werden, was sehr zeitaufwendig ist.

Ein weiterer Nachteil dieses Abbrennschweißverfahrens besteht darin, daß die Schienen beim Verschweißen etwas kürzer werden. Dies hat zur Folge, daß kurze Schienenabschnitte in den Schienenstrang eingespleist werden müssen, die das für die Schweißnaht erforderliche Schienenmaterial ausgleichen.

Weiterhin von Nachteil ist es, daß es erforderlich ist, die hydraulische Ausrüstung, die zur Erzeugung der enormen Druckkräfte zwischen den Schienen benötigt wird, zu abgelegenen Orten zu transportieren, wo der Schienenstrang gebaut wird. Bei dem Stumpfschweißen wird auch ein Grat am Umfang der miteinander verbundenen Schienen erzeugt, der anschließend abgeschert und überschliffen werden muß, um ein sanftes Abrollen der Räder auf den Schienen zu gewährleisten und Spannungskonzentrationen an der Verbindungsstelle zu vermeiden. Auch wenn das Stumpfschweißverfahren die Ausfallquote von am Einbauort hergestellten Verbindungen drastisch reduziert, wird das Thermitschweißverfahren immer noch angewandt, da es schnell und einfach durchgeführt werden kann, indem einfach eine Form um den Spalt zwischen den beiden beabstandeten Schienen hergestellt und der Spalt dann ausgegossen wird. Dieses Verfahren erfordert weder eine große hydraulische Anlage noch ist es teuer. Der hohen Ausfallquote wird dadurch begegnet, daß im Schadensfalle an einer Verbindungsstelle das Thermitschweißverfahren einfach erneut durchgeführt wird. Hierzu muß jedoch ein großer Teil der Schiene aus dem Schienenstrang herausgeschnitten werden und ein neues Schienenteil in den offenen Bereich eingesetzt werden. Demgemäß müssen für jede beschädigte Thermit-Verbindung zwei neue Thermit-Schweißstellen hergestellt werden, die natürlich wiederum die hohe Schadensanfälligkeit haben.

Auch wenn das Thermitschweißverfahren weiterhin im großen Umfang angewendet wird, ergibt sich aus Vorstehendem, daß ein ganz erhebliches Bedürfnis für ein Verfahren besteht, mit dessen Hilfe Schienen an ihrem Einbauort miteinander verbunden werden können, wobei das Verfahren die dem Thermitschweißverfahren zugesprochenen Vorteile, jedoch nicht deren hohe Ausfallquote hat. Um diesem seit Jahren bestehenden Bedürfnis gerecht zu werden, wurden immer wieder Versuche mit Lichtbogenschweißverfahren gemacht, beispielsweise mit Elektroschlackeverfahren, kontinuierlichem Lichtbogenschweißen und Unterpulverschweißen sowie Kombinationen dieser Verfahren. Keines dieser Verfahren ist erfolgreich gewesen, da hierzu kaum zu handhabende große Ausrüstungen erforderlich waren, das Schweißen und anschließende Überschleifen der Schweißnaht unerwünscht lange dauerte und akzeptable Ausfallquoten nicht erreicht wurden. Insbesondere das Lichtbogenschweißen im unteren Bereich des Spaltes zwischen den Schienen erfolgte nicht gleichmäßig genug. Darüber hinaus sind diese bisherigen Versuche, das Lichtbogenschweißen zum Verbinden der stirnseitigen Enden von Schienen für Schienenfahrzeuge einzusetzen, teuer gewesen, erforderten eine sehr aufwendige Ausrüstung und benötigten viel Zeit, um den Schweißvorgang vorzubereiten und den Schweißprozeß tatsächlich durchzuführen. Diese Zeit steht zum Verschweißen der Schienen vor Ort nicht zur Verfügung.

Schienen für Schienenfahrzeuge haben im allgemeinen einen Querschnitt mit einem unteren Sockelteil mit einer Auflagefläche, die vergleichsweise breit ist, so daß die Schiene in stabiler Lage auf den im Abstand voneinander angeordneten Schwellen aufsteht. Oberhalb des Sockelteils erstreckt sich ein etwa vertikal verlaufender Steg, der in ein oberes Kopfstück übergeht, auf dem die Räder der Schienenfahrzeuge abrollen. Dieses Kopfstück ist häufig gehärtet, um den darauf abrollenden Rädern der Züge einen besseren Abriebwiderstand entgegenzusetzen. Besonders in den Kurven des Gleises ist es wichtig, daß die Kopfstücke eine hohe Härte aufweisen, da es hier zu Schlupf zwischen den Rädern und den Schienen infolge der Starrachsenkonstruktion eines Radpaares kommt. Darüber hinaus soll die Abrollfläche der Schienen glatt sein, um Vibrationen bei den auf den Schienen fahrenden Wagen zu unterbinden. Gerade dieses Bedürfnis, Vibrationen zu reduzieren, hat den Wunsch verstärkt, die Schienen für Hochgeschwindigkeits- und Schwergewichtsschienensysteme stumpf zu verschweißen. Vor langer Zeit wurden die Schienen noch nicht miteinander verschweißt, was die charakteristischen Vibrationen und Geräusche in den darüberfahrenden Zügen zur Folge hatte. Mit dem Vormarsch von Hochgeschwindigkeits-, Schwergewichts- und High-Tech-Schie-nensystemen müssen die Einzelschienen zu einem kontinuierlichen Schienenstrang verbunden werden, was den Ruf nach Verbindungsverfahren verstärkt hat, die am Einbauort der Schienen eingesetzt werden können und die Gegenstand der vorliegenden Erfindung sind.

Aufgabe der Erfindung ist es, ein Verfahren und eine Anordnung anzugeben, womit die Nachteile des Thermitverfahrens und des Abbrennschweißverfahrens vermieden werden und wobei Schutzgasschweißen zum Einsatz kommt, um die im Abstand voneinander liegenden stirnseitigen Enden von Schienen für Schienenfahrzeuge an deren Einbauort miteinander zu verbinden, wobei das Verfahren und die Anordnung eine wirtschaftliche, schnelle, mechanisch und metallurgisch überzeugende Verbindung ermöglichen sollen.

Erfindungsgemäß werden die stirnseitigen Enden der zu verbindenden Schienen im Abstand voneinander angeordnet und bilden so einen nach unten hin offenen Spalt. Dieser Spalt ist so breit, daß er unter Schutzgas zugeschweißt werden kann, wozu das Elektrodenmaterial und die Schweißpistole in den Spalt eingeführt werden können. Nach dem Ausfüllen des Spaltes im Sockel- und im Stegbereich mittels einer im Schutzgasschweißverfahren aufgeschmolzenen Schweißelektrode wird der Spalt im Kopfbereich mit dem erfindungsgemäßen, in Patentanspruch 1 angegebenen Verfahren geschlossen. Nach der Erfindung kann bei der im Spalt angeordneten Schweißnaht im Kopfbereich der Schienen eine verbesserte Festigkeit dadurch erreicht werden, daß die mit dem Schweißmetall gelegten Schweißraupen in dem Spalt in den Übergangsbereichen zwischen Kopfteil und Stegteil der Schienen und in den Spaltbereichen zwischen dem Kopfmittelteil und Scheitelteil des Schienenkopfes in besonderer Art und Weise ausgestaltet werden. Hierbei werden die Schweißraupen aus Elektrodenmaterial so gelegt, daß es zu einer Schweißnahtverstärkung an den seitlich einander gegenüberliegenden Kanten von Übergangsbereich und Hauptteil der Schienenköpfe kommt, so daß ein optimaler Schutz gegen ein Ablösen des Kopfteils vom Stegteil bei der nachfolgenden Benutzung des Gleises und die großen, von Lokomotiven und Eisenbahnwaggons ausgeübten Kräfte und dadurch erfolgenden, wellenförmigen Verwindungen der Schienen und der dazwischenliegenden Schweißnähte besteht. Zweckmäßig wird hierzu der Spalt im unteren Bereich der Schienensockel - wie in der europäischen Patentanmeldung EP 0 860 548 beschrieben - durch Verwendung einer Sperrplatte und eines Sprühschweißens bei konstanter Spannung ausgefüllt und anschließend der Spalt im oberen Bereich des Sockelteils, des Steges und des Schienenkopfbereichs im Impulsschweißverfahren verschweißt. Nach dem Verschweißen der Schienenstege bis hin zum Übergangsbereich zu den Schienenköpfen werden Elektrodenmaterialraupen kontinuierlich nacheinander in quer entgegengesetzten Richtungen zwischen die lateral außenliegenden Kanten im Übergangsbereich zum Kopfhauptteil und zum Scheitelteil gelegt, wobei die Bewegung der Schweißelektrode zu Beginn der Ablage einer Schweißraupe verzögert wird und so nachfolgend Schweißraupen gelegt werden, die in entgegensetzten Richtungen zueinander verlaufen. Jede Schweißraupe hat an einem ihrer äußeren Enden einen Schweißnahtabschnitt, der in Vertikalrichtung dicker ist als der Rest der Raupe und der über die Seitenfläche der Schiene ein Stück weit hinausragt und so eine gute Unterlage für die nächsthöhere Schweißnaht bildet, die von der gegenüberliegenden Seite her geschweißt ist und parallel zu der darunterliegenden Naht verläuft. Die Spaltteile zwischen den Übergangs- und Hauptscheitelbereichen der Schienenkopfteile werden ausgefüllt, indem die Schweißelektrode kontinuierlich zwischen den lateral einander gegenüberliegenden Seitenflächen des Kopfes in der vorgeschriebenen Weise im Spalt hin- und herbewegt werden, bis dieser vollständig ausgefüllt ist.

Hauptziel der Erfindung ist es vor allem, ein Verfahren zum Schutzgasverschweißen von stählernen Eisenbahnschienen anzugeben, wobei das Verfahren eine schnelle Verschweißung der Schienen an deren Einbauart ermöglicht und ein Versagen der Schweißnaht nur selten auftritt. Mit dem erfindungsgemäßen Verfahren können die Schienen so verschweißt werden, daß die Festigkeit der Schweißnaht im Kopfbereich der Schienen optimiert wird. Durch die besondere Anordnung der Schweißraupen kann eine Schweißnahtverstärkung an den gegenüberliegenden Seitenflächen der Schienenköpfe erreicht werden, wodurch ein besonders guter Schutz gegen eine Abtrennung des Kopfes von den Schienenstegen in Vertikalrichtung gegeben ist.

Im unteren Bereich wird als Schweißverfahren das Sprühlichtbogenschweißen mit konstanter Spannung angewandt. Dieses Verfahren sorgt für eine große Hitze und Einbrandtiefe der unteren Schicht des aufgetragenen Schweißmetalls. Die Elektrode ist eine hochfeste, niedrig legierte Metallkernelektrode, wobei das Kernmaterial die erforderlichen Legierungsmetalle enthält. Die Metallkernelektrode wird von einem geeigneten Schutzgas abgeschirmt. In Versuchen hat sich eine Metallkernelektrode mit der Bezeichnung MC 1100 Outershield als zweckmäßig erwiesen, die unter einer Gasabschirmung von 95% Argon und 5% Kohlendioxyd oder Sauerstoff verarbeitet wird. Das Kernmetall der Elektrode wird so gewählt, daß es zu dem Metall paßt, aus dem die beabstandeten Schienen bestehen, so daß die erforderliche Ersatzstreckgrenze erreicht wird. Die Schutzgasabschirmung um die fortlaufend vorgeschobene Metallkernelektrode wird in an sich bekannter Weise entweder im Sprühverfahren oder einem nachfolgend angewendeten Impulslichtbogenschweißverfahren vorgesehen. Bei diesem Verfahren wird sehr wenig Schlacke erzeugt, die bei den Unterpulver- und Elektroschlackeschweißverfahren ein Problem darstellte. Die bei diesen Verfahren erzeugte Schlacke kann zu Einschlüssen im Metall führen, insbesondere an dem Übergangsbereich zwischen dem geschmolzenen Metall und den Schienenstirnseiten, und diese Einschlüsse haben dann häufig ein Versagen der Schweißnaht zur Folge.

Die vorliegende Erfindung verwendet ein Schutzgasschweißverfahren entweder im Impulsmodus oder im Sprühlichtbogenverfahren mit konstanter Spannung, wobei das Sprühverfahren im unteren Bereich des Spaltes zur Anwendung kommt. Nach der erfindungsgemäßen Anordnung wird eine digital gesteuerte bzw. geregelte Hochleistungsstromversorgungseinheit mit aufwendiger Hochgeschwindigkeitssteuerung für die Wellenform verwendet. Als besonders zweckmäßig hat sich eine Stromversorgung des Modells "Electric Powerwave 450" der Anmelderin erwiesen, mit der es möglich ist, ohne Unterbrechung zwischen Sprühschweißen mit konstanter Spannung und gesteuertem Impulsschweißen hinund herzuschalten. In jedem Fall ist das erfindungsgemäß gewählte Schweißverfahren ein Schutzgasschweißverfahren, mit dem es möglich ist, die erforderliche große Hitze für eine sichere metallische Verbindung zwischen den Schienenenden zu erzeugen und bei dem durch die ausschmelzende Metallkernelektrode bei deren Vorschub in das Schweißbad ein Schweißmetall erzeugt wird, das den Anforderungen entspricht.

Bevor die Schienen in der beschriebenen Weise miteinander verschweißt werden, ist es zweckmäßig, sie auf eine Temperatur von ca. 480°C vorzuwärmen. Die erste Schweißmetallschicht wird unter Anschmelzen der zwischen den Schienen eingeklemmten Sperrplatte gelegt, indem die Elektrode im Spalt hin- und herbewegt wird, während sie gleichzeitig quer zur Längsrichtung der Schienen im Spalt verfährt. Diese erste oder Wurzellage wird im Sprühschweißverfahren aufgetragen, genau wie einige weitere Schichten, um hier eine hohe Eindringtiefe und eine große Erhitzung in dem großen Bereich der Schienensockel zu erzeugen. Anschließend wird die Stromversorgung auf ein Impulsschweißverfahren umgestellt. Es erfolgen dann weitere Durchgänge der Elektrode zwischen den Schienen im Sockelbereich. Sobald die erste, spätestens die zweite Schweißlage von unten fertiggestellt ist, ist die eingeklemmte Sperrplatte für den weiteren Schweißverlauf ohne Bedeutung, da das auf der Platte abgelegte, geschmolzene Metall verfestigt ist.

Wenn die Schweißelektrode nach Fertigstellung der unteren Schweißlagen den Stegbereich der Schienen erreicht, werden profilierte Kupferschuhe eingesetzt, um den Spalt seitlich zu verschließen, so daß ein lediglich oben offener Hohlraum zwischen den Schienenstirnseiten entsteht. Dieser Hohlraum wird erfindungsgemäß ebenfalls im Schutzgasschweißverfahren ausgefüllt, wobei hier in einer bevorzugten Ausführungsform wieder das Sprühlichtbogenschweißen mit konstanter Spannung zur Anwendung kommt, um eine möglichst gute Einbrandtiefe zu erreichen. Das Lichtbogenschweißen setzt sich oberhalb des Stegbereiches der Schienen bis zu deren Kopfteil fort. In vorteilhafter Ausgestaltung der Erfindung wird von dem Impulsschweißverfahren Gebrauch gemacht, um Übergangsbereiche zwischen den sprühverschweißten Teilen zu schaffen, wobei das Sprühschweißverfahren sowohl in der Anfangsphase am unteren Sockelbereich wie auch bei den größten Teilen sowohl vom Kopfteil als auch vom Steg zur Anwendung kommt. Es hat sich gezeigt, daß gute Ergebnisse erzielt werden, wenn zwischen einem Sprühverfahren und einem Impulsverfahren hin- und hergeschaltet wird. Das Impulslichtbogenschweißen wird verwendet, wenn es auf eine kontrollierte Wärmezufuhr in einigen Bereichen der zu verschweißenden Schienen ankommt.

Weitere Merkmale und Vorteile der Erfindung ergeben sich aus der nachfolgenden Beschreibung und den Zeichnungen, worin bevorzugte Ausgestaltungen der Erfindung an Beispielen näher erläutert werden. Es zeigt:
Fig. 1 einen Ausschnitt aus einem Eisenbahngleiskörper mit im Abstand voneinander angeordneten, noch unverschweißten Schienen in einer perspektivischen Darstellung;
Fig. 2 einen Ausschnitt aus einer Schiene in ihrem Endbereich mit darauf abrollendem Rad eines Schienenfahrzeuges in perspektivischer Darstellung und teilweise im Schnitt;
Fig. 3 zwei im Abstand voneinander angeordnete, für das Verschweißen vorbereitete Schienen in einer Seitenansicht;
Fig. 4 einen Schnitt längs der Linie 4-4 nach Fig. 3;
Fig. 5 eine beim Ausfüllen des Spaltes zum Einsatz kommende Sperrplatte in einer perspektivischen Darstellung;
Fig. 6 die Sperrplatte nach Fig. 5 in einer Stirnansicht und teilweise im Schnitt;
Fig. 7 eine vergrößerte Darstellung der beiden miteinan der zu verschweißenden Schienen in deren Sockelbereich und der teilweise darin eingebauten Sperrplatte in einer Seitenansicht;
Fig. 8 den Gegenstand der Fig. 7 mit fertig eingebauter Sperrplatte und in den Spalt eingeführter Schweißelektrode zu Beginn des Verschweißens;
Fig. 9 eine Draufsicht auf den Spalt zwischen den beiden zu verschweißenden Schienen zur Illustration bestimmter Anfordernisse an die Sperrplatte nach Fig. 5 und 6;
Fig. 10 eine Draufsicht auf den Spalt zwischen den beiden benachbarten Schienen beim Verschweißen der Wurzellage bzw. ersten Lage Schweißmaterials;
Fig. 11 u. 11A vergrößerte, Fig. 4 entsprechende Darstellungen des Schienenspaltes, teilweise im Schnitt beim Schweißen im Sockelbereich und im Bereich des Schienensteges;
Fig. 12 eine weitere Ausgestaltung der Sperrplatte in Stirnansicht der Schiene und teilweise im Schnitt;
Fig. 13 eine Schiene in stirnseitiger Ansicht zur Erläuterung der Bereiche des Spaltes, die im Sprühschweißverfahren mit konstanter Spannung und im Impulsschweißverfahren geschweißt werden;
Fig. 14 den von Kupferschuhen seitlich verschlossenen Spalt zwischen den Schienen im Stegbereich, teilweise im Schnitt;
Fig. 15 eine schematische Darstellung der in Fig. 14 dar gestellten Schweißpistole und Schweißelektrode;
Fig. 16 die Schweißpistole und -elektrode im Spalt zwischen den Schienen in einer Ansicht von rechts nach links gem. Fig. 14 und teilweise im Schnitt;
Fig. 17 eine vergrößerte Schnittdarstellung durch den Spalt zwischen den zu verschweißenden Schienen im Übergangsbereich zwischen dem Steg- und Kopfteil mit einer gelegten Schweißraupe;
Fig. 18 eine Detaildarstellung der Schweißelektrode am Anfangspunkt der Schweißnaht entsprechend deren linken Ende in Fig. 17;
Fig. 19 eine Draufsicht auf den Anfangsbereich der Schweißraupe nach Fig. 18;
Fig. 20 eine weiter vergrößerte Darstellung des Anfangspunktes der Schweißraupe in einem Schnitt längs der Linie 20-20 in Fig. 19;
Fig. 21 einen Schnitt durch den zwischen den Schienen zu geschweißten Spalt zur Erläuterung der Schweißmaterialablage in den Übergangsbereichen zwischen Steg und Kopfteil der Schienen in bevorzugter Ausgestaltung der Erfindung;
Fig. 22 einen vergrößerten Ausschnitt aus dem Schienenkopf zur Erläuterung der Verzögerungszeiten beim Ablegen von Schweißraupen zwischen den Kopfteilen gem. der bevorzugten Ausgestaltung der Erfindung; und
Fig. 23 eine schematische Darstellung der Schiene, bei der nahezu alle Teile des Spaltes zwischen den beiden Schienen im Impulsschweißverfahren miteinander verbunden sind.

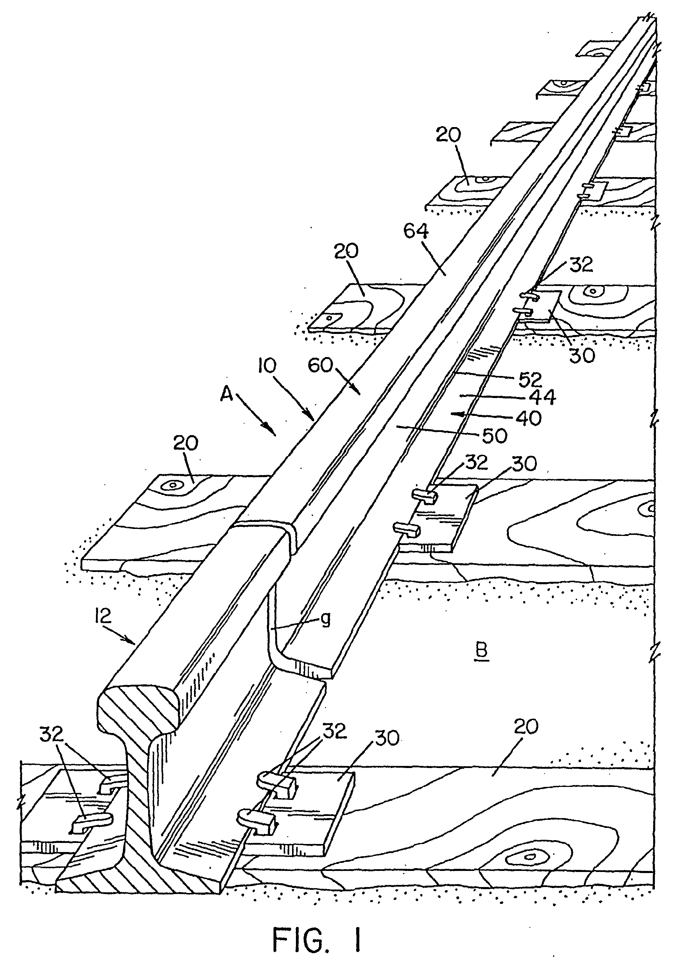

Fig. 1 zeigt das Gleis A einer Eisenbahnstrecke mit Schienen 10, 12, die zur Bildung eines endlosen Schienenstranges miteinander verbunden werden sollen. Die Schienen sind auf Schwellen 20 des Gleisbettes B bzw. darauf angeordneten Unterstützungskappen 30 angeordnet und mit Schienennägeln 32 gesichert. Dabei sind die Schienen 10, 12 so angeordnet, daß sie zwischen ihren Stirnseiten einen Spalt g frei lassen, der mit geschmolzenem Metall ausgefüllt werden soll, um die beiden Schienenelemente 10, 12 miteinander zur Bildung des endlosen Schienenstranges unmittelbar am Einbauort der Schienen, also nicht bereits werksseitig miteinander zu verbinden. Der Spalt g kann dabei ein Spalt zwischen zwei Schienenabschnitten sein, die zur Reparatur miteinander verbunden werden sollen oder es kann sich um den Spalt zwischen zwei Einzelschienen handeln, die beim ersten Herstellen des Gleiskörpers zur Bildung eines Endlosgleises miteinander verschweißt werden. Wenn der Spalt g Reparaturzwecken dient, ist es manchmal erforderlich, die Schienen um ein Stück zu kürzen und ein längeres Reparaturstück einzusetzen. Ein derartiges Verfahren wird angewandt, um Schienen oder deren Verbindungsstellen zu reparieren, die gebrochen sind oder um Verbindungsstellen zu erneuern, die sich als fehlerhaft erwiesen haben. In all diesen Fällen bilden die beiden miteinander zu verbindenden Schienen 10, 12 bzw. Schienenelemente zwischen sich einen Spalt g, der im allgemeinen eine Spaltbreite in Schienenlängsrichtung von etwa 25 mm aufweist.

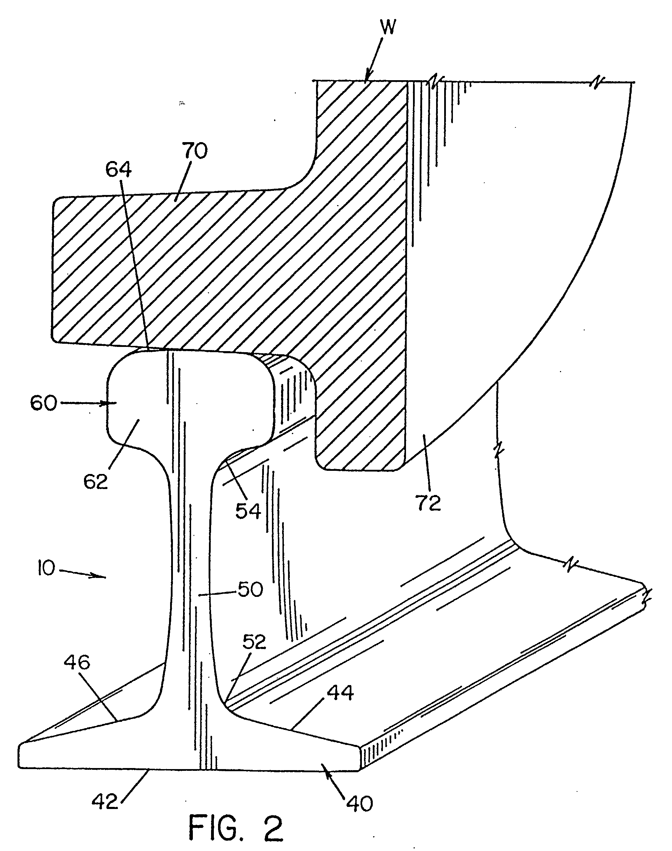

Wie sich insbesondere aus Fig. 2 ergibt, hat die Schiene 10 ein Standardprofil oder einen Standardquerschnitt mit einem unteren Sockelteil 40, der vergleichsweise breit ist und der eine Auflagefläche 42 bildet, die eine stabile Auflage der Schiene auf den Schwellen 20 gewährleistet, um das Gewicht der auf dem Gleis fahrenden Schienenfahrzeuge zu tragen.

Der Sockelteil 40 weist zwei zur Sockelmitte hin ansteigende Oberseiten 40, 46 auf, die mit unteren Ausrundungen 52 in einen aufragenden, vertikalen Steg 50 übergehen. Am oberen Ende des Steges geht dieser mit oberen Ausrundungen 54 in ein Kopfteil 60 mit einem vergleichsweise großen Mittelstück 62 und einer oberen Radablauffläche 64 über, die auch als Schienenkrone oder Schienenscheitel bezeichnet wird und auf der ein Rad W eines Schienenfahrzeuges mit seiner zylindrischen Abrollfläche 70 abrollt, während eine Radscheibe 72 des Rades W verhindert, daß es zu weit zur linken Seite des Kopfteiles 60 verläuft, während der Zug auf dem Gleis entlangrollt. Angesichts des Anlaufens des Rades mit der Radscheibe 72 am Mittelstück 62 des Schienenkopfes und der großen Gewichtslast, die über den Radzylinder 70 auf die obere Radablauffläche 64 der Schiene übertragen wird, hat das Kopfteil 60 üblicherweise eine Brinellhärte von 300 (-60, +40) auf der Brinellskala. Da der Kopfbereich der Schiene gehärtet ist, muß der verwendete Werkstoff zumindest in diesem Kopfbereich ein vergleichsweise hochlegierter Stahl sein. Die Stahllegierung, die als Füllmaterial zum Ausfüllen des Spaltes g verwendet wird, ermöglicht eine Härte zumindest im oberen Schienenbereich beim Spalt g, die den Anforderungen an die Schweißnahtgüte der Schiene erfindungsgemäß entspricht.

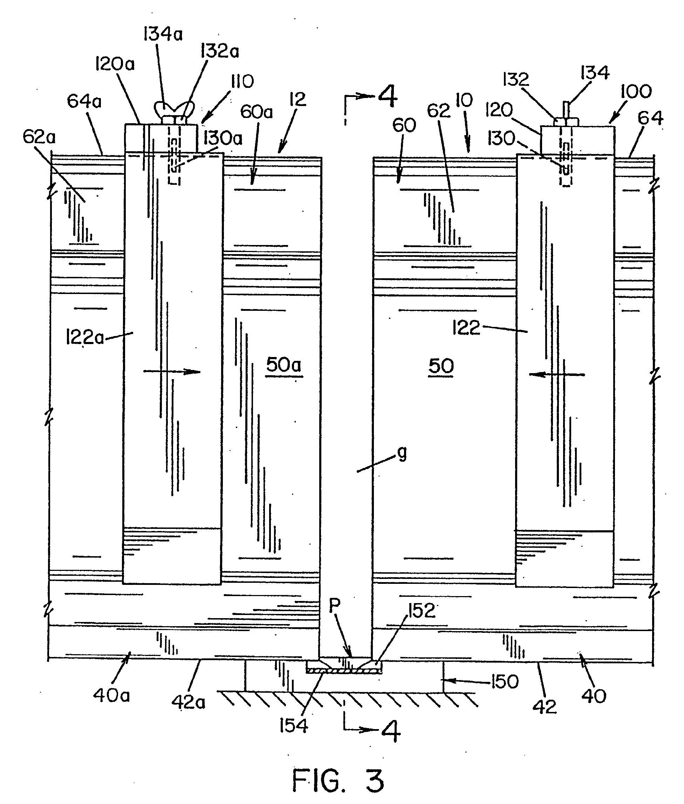

In Fig. 3 sind diejenigen Teile der Schiene 12, die den jeweiligen Teilen der benachbarten Schiene 10 entsprechen, mit dem Index a versehen. Die Erläuterung dieser Teile wird im nachfolgenden lediglich im Zusammenhang mit der Schiene 10 erfolgen, wobei die jeweiligen Teile an der Schiene 12 entsprechend ausgestaltet sind.

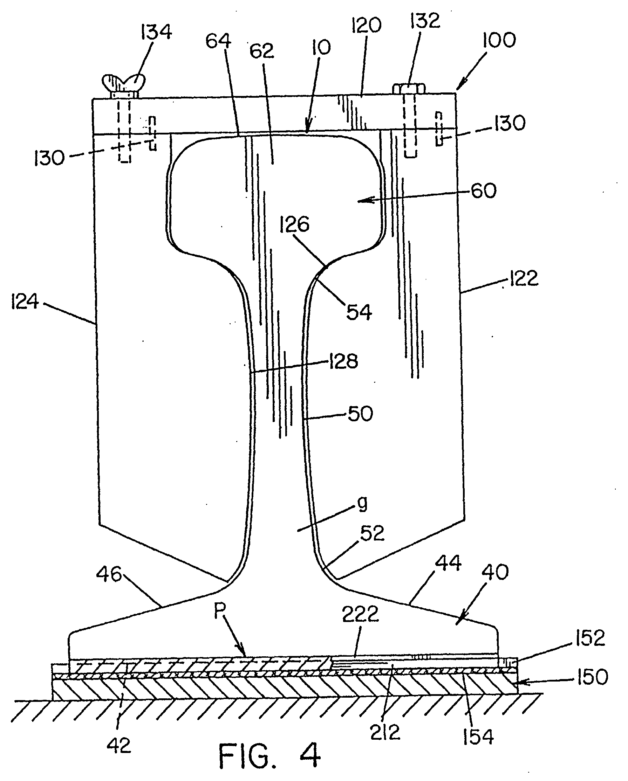

Wie sich aus den Fig. 3 und 4 ergibt, sind die Schienen 10, 12 an ihren Schienenenden in der Nähe des Spaltes g mit den Schienenkopf 60 übergreifenden Kupferschuhen 100, 110 versehen. Dabei ist der Schuh 100, der im nachfolgenden näher beschrieben wird, an der Schiene 10 angeordnet, während der Schuh 110 die Schiene 12 umgibt.

Der am besten in Fig. 4 erkennbare Schuh 100 besteht im wesentlichen aus einem oberen Querriegel 120 mit seitlich von diesem herabhängenden Schuhteilen 122, 124, die aus stabilen Kupferblöcken bestehen und so ausgestaltet sind, daß sie zusammen mit dem oberen Querriegel 120 entlang der Schiene verschoben werden können. Der obere Querriegel 120 sorgt dabei für die korrekte Ausrichtung der Schuhseitenteile 122, 124 und ihren korrekten Abstand voneinander sowie für die erwünschte den Spaltbreit zwischen den Schuhseitenteilen und den Schienenabschnitten. An ihren zur Schiene hinweisenden Innenseite sind die Schuhseitenteile mit an den Querschnitt der Schiene angepaßten Konturflächen 126, 128 versehen, so daß der Spalt g seitlich verschlossen wird, wenn die Schalungsschuhe 100, 110 am Spalt gegeneinander geschoben werden, so daß hier ein Hohlraum entsteht, dessen Querschnitt der Form der Schienen 10, 12 etwa entspricht. Um die herabhängenden Schuhseitenteile zu stabilisieren, sind Führungsstifte 130 vorgesehen, die zusammen mit Schraubenbolzen 132, 134 einen einfachen Zusammenbau der schweren, kupfernen Schuhseitenteile 122, 124 mit ihrem oberen Tragriegel 120 an der jeweiligen Schiene ermöglichen.

Beim Verschweißen der Schienen, das im nachfolgenden noch genau beschrieben werden wird, werden die Schuhe in die in Fig. 3 dargestellte Position gebracht, so daß der Spalt g offen ist und ein Verschweißen der Sockelteile der Schienen im unteren Bereich problemlos möglich ist. Anschließend werden die Schalungsschuhe 100, 110 aufeinander zu bewegt und verschließen dabei den Spalt, um ein Zusammenschweißen der sich nach oben erstreckenden Stegbereiche 50, 50a der Schienen 10, 12 zu ermöglichen.

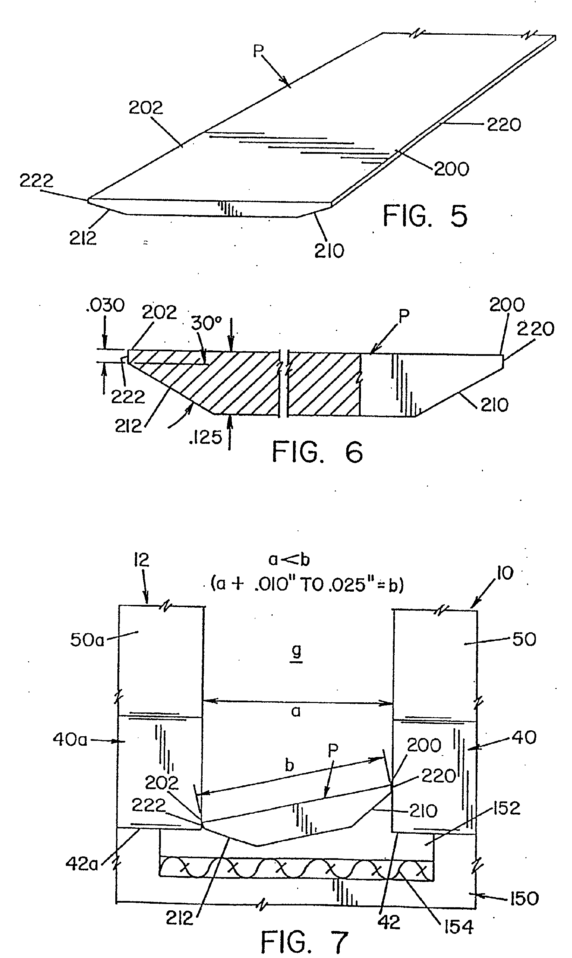

Wie insbesondere aus Fig. 3 weiterhin ersichtlich ist, ist unter der Unterseite 42 der Schienensockel 40, 40a ein weiterer, unterer Block 150 vorgesehen, der ebenfalls aus Kupfer besteht oder einem Legierungsmetall mit hohem Kupferanteil. Dieser Block weist an seiner Oberseite eine sich quer zur Schienenlängsrichtung erstreckende Ausnehmung 152 auf, in der ein Isolierungselement in Form einer Keramikschicht 154 angeordnet ist, die unterhalb der Bodenöffnung des Spaltes g zwischen den Schienen zu liegen kommt, wie dies in Fig. 3 dargestellt ist. Die Bodenöffnung des Spaltes g wird mit einer nachfolgend näher beschriebenen Sperrplatte P verschlossen, deren Ausgestaltung am besten anhand der Fig. 5, 6 und 7 ersichtlich ist.

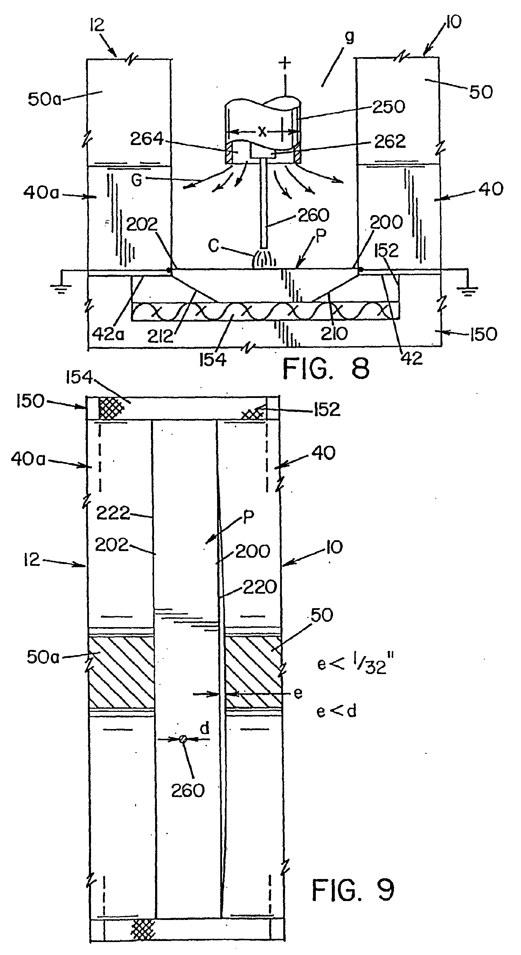

Es ist bereits in der Vergangenheit versucht worden, den Spalt g zwischen den Schienen durch elektrisches Lichtbogenschweißen zu verschließen. Diese Versuche waren nicht erfolgreich, da die verwendeten Schweißverfahren nicht technisch einwandfrei durchgeführt werden konnten und es keinen tragenden Unterbau gab, auf dem die erste und ggf. zweite Schicht Elektrodenmaterial im Spalt abgelegt werden konnte. Dieser Spalt ist etwa 25 mm breit und muß die nach unten ausgerichtete Schweißpistole mit der Elektrode und einer Gasdüse aufnehmen können, wie dies in Fig. 8 dargestellt ist. Da der Spalt zur Aufnahme des Schweißwerkzeuges vergleichsweise breit sein muß, war es in der Vergangenheit nicht möglich, den Spalt gleichmäßig und ohne Schweißfehler auszufüllen, insbesondere nicht im Sockelbereich, der die Hauptbelastung der Schienen trägt und bei dem die Anforderung an die Schweißnahtgüte besonders hoch ist. Die Schienen biegen sich im Sockelbereich 40 und sind dort besonders hohen Spannungen ausgesetzt. Um diesem Problem zu begegnen, wird in der EP 0 860 548 der Einsatz der in den Fig. 5 bis 7 dargestellten Platte P vorgeschlagen. Diese Platte besteht aus kohlenstoffarmem Stahl, da die im Spalt erwünschten Legierungsbestandteile über das im Kern der verwendeten Elektrode enthaltene Metallpulver beim Lichtbogenschweißen eingetragen werden. Die Platte hat eine Dicke zwischen 1,25 mm und 7,65 mm. Zweckmäßig beträgt die Dicke der Platte etwa 3,2 mm und sie hat eine Breite zwischen ihren parallelen Außenkanten 200, 202, die in Fig. 7 mit b bezeichnet ist. Diese Abmessung ist in ihrem ursprünglichen Zustand geringfügig größer als die Breite g des Spaltes g. Demgemäß muß die Sperrplatte P mit Hilfe eines Werkzeuges, beispielsweise eines Hammers, zwischen die Schienen 10, 12 in die in Fig. 3 dargestellte, unterste Stellung eingeklemmt werden. Bei diesem Einschlagen wird die Platte auf eine geringfügig kleinere Endbreite verformt. Durch dieses Festkeilen, bei dem sich eine oder beide der beiden Kanten 200, 202 der Platte P ankümpeln, wird ein sicherer elektrischer Kontakt zwischen der Platte P und den Schienen 10, 12 erreicht, die geerdet sind. In ihrer endgültigen Position liegt die Platte auf der Oberseite des in der Ausnahme liegenden Isolationselements 154 des unteren Kupferblocks 150 auf. Der Block 150 dient als Sperre für geschmolzenes Metall, das im Spalt g zwischen den Schienen 10, 12 beim Lichtbogenschweißen abgelegt wird, wie dies nachfolgend noch näher beschrieben wird. Wie sich aus den Fig. 5 und 6 ergibt, ist die Platte P an ihrem vorderen und hinteren, zu den Schienenstirnseiten weisenden Randbereichen mit 30°-Schrägflächen 210, 212 versehen, so daß sich die Platte an ihren Kanten 200, 202 auf eine Dicke von etwa 0,75 mm verjüngt und dort flache Anschlagleisten 220, 222 bildet. Diese Anschlagleisten oder -wände werden gegen die stirnseitigen Flächen der Schienen 10, 12 am Boden des Spaltes g gedrückt, so daß die Platte zu Beginn des Schweißprozesses einen starren, fest eingeklemmten Boden für die erste Schweißlage bildet, wie dies insbesondere aus Fig. 8 ersichtlich ist.

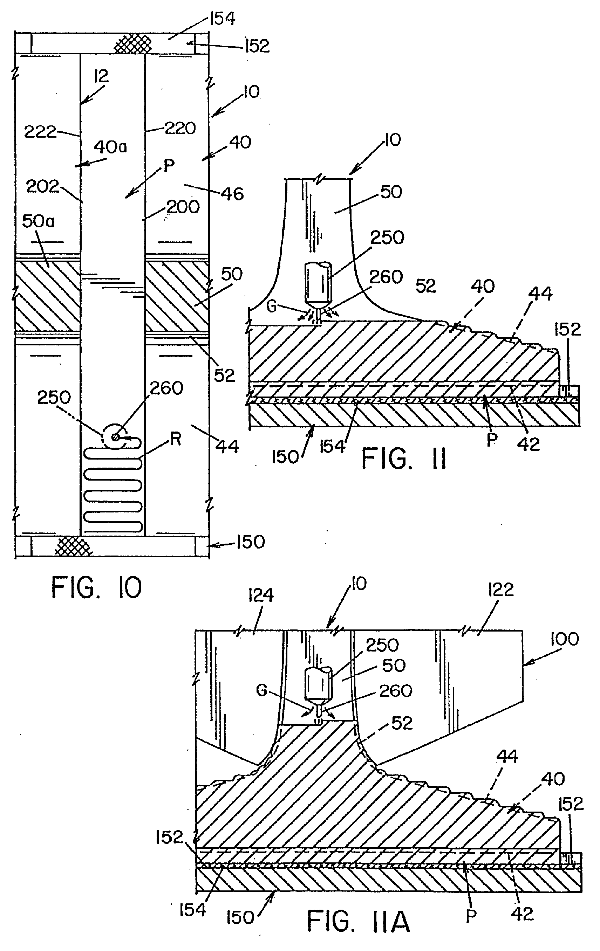

Die in Fig. 8 dargestellte Schweißpistole 250 hat einen Durchmesser x von etwa 12,5 mm, so daß der Spalt g mit einer Breite von ca. 25 mm die Bewegung der Schweißpistole 250 zwischen den beiden stirnseitigen Enden der Schienen 10, 12 erlaubt. Aus der Schweißpistole 250 wird beim Schweißen durch eine vordere Führung 262 kontinuierlich eine Metallkernelektrode 260 in Form eines Schweißdrahtes zugeführt, wozu sich in der Praxis eine hochlegierte Metallkernelektrode, beispielsweise des Typs E110C-G als zweckmäßig erwiesen hat. Bei dem Draht bzw. der Elektrode kann es sich um eine als "Outershield MC1100" bezeichnete Elektrode der Anmelderin handeln. Beim Vorschub der Elektrode 260 nach unten entsteht zwischen der Sperrplatte P und der Elektrode 260 ein Lichtbogen, der entweder zum Sprühlichtbogenschweißen oder zum Impulsschweißen verwendet werden kann, wie dies nachfolgend noch beschrieben wird. Aus einem die Elektrodenführung 262 umgebenden Spalt wird ein Schutzgas G in an sich bekannter Weise ausgeblasen, um den Lichtbogen C von der Atmosphäre abzuschirmen. Da die Sperrplatte P fest zwischen den beiden Schienen 10, 12 eingeklemmt ist, gibt es zu diesem eine elektrische Verbindung, so daß der Lichtbogen direkt auf die Oberseite der Platte überspringen kann und auf der Sperrplatte selbst das Schweißbad während des ersten und/oder zweiten Durchganges der Elektrode bei ihrem Vormarsch entlang der oberen Plattenfläche fließt. Die Platte ermöglicht somit einen kontinuierlichen Lichtbogen zu Beginn des Schweißprozesses. Die unterhalb der Platte vorgesehene Isolationsschicht 154 verhindert, daß der Lichtbogen bis zu dem darunterliegenden Kupferblock 150 durchbrennen kann. Der Block 150 bildet somit eine gute Wärmesenke, ohne daß Kupfer in die Schweißnaht eindringen kann. Kupferverunreinigungen in der Schweißnaht werden so durch die Platte P und die Verwendung der keramischen Schicht 154 vermieden. Beim Starten des Lichtbogens wird dieser durch die vergleichsweise dicke Platte P kaum durchbrennen. Beim Hin- und Herbewegen des Schweißbrenners zwischen den Schienen 10 und 12 gelangt der Lichtbogen jedoch in den Bereich der abgeschrägten Flächen 210, 212, wo er infolge der dort geringeren Dicke der Platte P an deren Randbereichen 200, 202 durch diese durchschlagen kann. Das geschmolzene Schweißmetall von der Metallkernelektrode kann dann jedoch problemlos auf die untere Isolationsschicht bzw. Keramikschicht 154 abfließen. Wie bereits erwähnt, sind die Kantenbereiche 200, 202 abgeschrägt, um das Einklemmen der Platte zu ermöglichen, das für einen guten elektrischen Kontakt mit den Schienen und die Erdung der Platte beim Schweißen erforderlich ist. Beim Schweißen umgibt das Schutzgas G den Lichtbogen C, während die Platte P eine untere Barriere für das Schweißmetall bildet. In Fig. 10 ist der schlangenförmige Weg angedeutet, den die Elektrode 260 bei ihrem ersten Übergang über die Platte P nimmt, um eine erste Schicht oder eine Wurzellage R mit Schweißmetall zu legen. Das bei diesem ersten Durchgang aufgeschmolzene Metall gelangt auf die Platte P und bildet ein Schweißbad, das zu einer Verbindung der Sockel der Schienen 10, 12 führt.

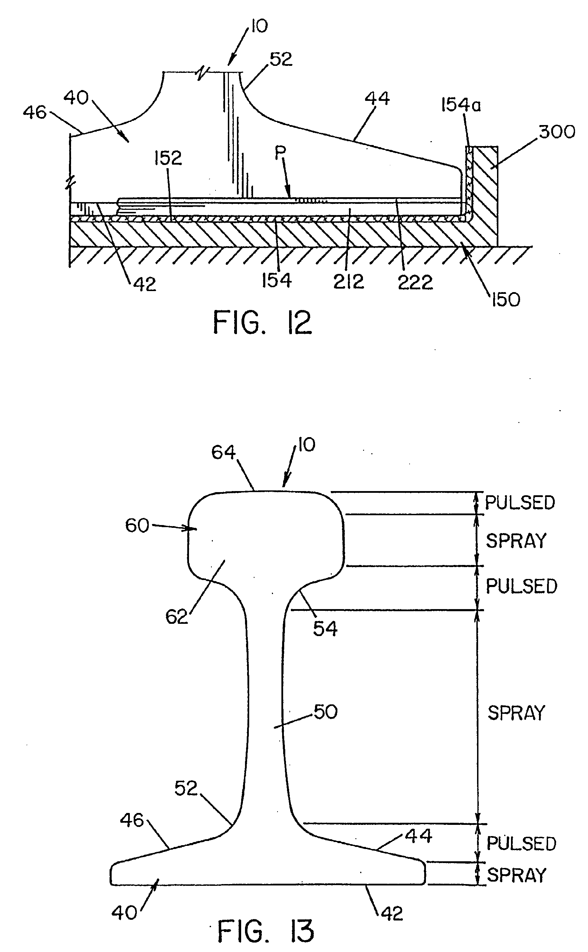

Das Verschweißen wird mit Hilfe eines digital gesteuerten Inverterschweißgerätes durchgeführt, das in der Lage ist, komplexe Hochgeschwindigkeitswellenformsteuerung zu ermöglichen. Ein solches Schweißgerät ist die "Powerwave 450 power supply" der Anmelderin. Die erste oder Wurzellage R wird im Sprühlichtbogenschweißverfahren mit konstanter Spannung gelegt, um eine große Wärmemenge und hohe Einbrandtiefe der Wurzel zu erreichen. Wie sich aus Fig. 11 ergibt, werden quer über den Spalt G mehrere Schichten im unteren Spaltbereich zwischen den Sockelteilen 40, 40a der Schienen 10, 12 gelegt. Nachdem einige Schweißlagen mit konstanter Spannung erzeugt sind, wird die Stromversorgung in den Impulsbetrieb umgeschaltet, in dem zusätzliche Schichten aufgebracht werden, wie dies wiederum in Fig. 11 dargestellt ist. Auf diese Art und Weise wird der Sokkelbereich des Spaltes G zugeschweißt. Anschließend werden - wie in Fig. 11a gezeigt - die Schalungsschuhe 100, 110 zusammengeschoben, um den Spalt G in seinem Stegbereich und Kopfteil der Schienen 10, 12 seitlich zu verschließen. Da die oberen Querriegel 120, 120a entlang der Schienen zurückgesetzt sind, wie dies in Fig. 3 erkennbar ist, verbleibt zwischen den Schuhen 100, 110 eine obere Öffnung, die es erlaubt, die Schweißpistole 150 beim Verschweißen weiterhin einzusetzen. Beim Schweißen kann zwischen dem Sprühschweißen mit konstanter Spannung oder dem schnelleren Impulsschweißen hin- und hergeschaltet werden. In beiden Fällen handelt es sich um ein Schutzgasschweißverfahren, um den Spalt mit Elektrodenmaterial von der Elektrode 260 auszufüllen. Das im Kern der Elektrode enthaltene Metall ist so gewählt, daß das den Spalt ausfüllende Material die erforderlichen Legierungsbestandteile enthält, um die gewünschte Festigkeit und die metallurgischen Eigenschafen der Schweißverbindung zu erhalten.

Das in der Praxis angewendete Schweißverfahren ist in Fig. 13 schematisch dargestellt. Im Bereich der schrägen Oberseiten 44, 46 der Schienensockel 40, 40a wird im Impulsverfahren geschweißt, ebenso wie im Bereich der oberen Ausrundungen 54 und im Scheitelbereich 64 des Schienenkopfteils 60. Das Sprühlichtbogenschweißen wird verwendet im unteren Sockelbereich zu Beginn des Verschweißens mit Legen der Wurzellage, um hier einen sauberen Anfang der Verschweißung sicherzustellen und eine feste Verbindung der Schienen im Sockelbereich zu gewährleisten. Es ist möglich, den Sprühmodus und den Impulsmodus zu kombinieren oder das Sprühlichtbogenverfahren zum Zuschweißen des gesamten Spalts zu verwenden. Wie bereits erwähnt, wird das Sprühverfahren insbesondere zu Beginn des Verschweißens bei der neuen Sperrplatte P angewendet.

Obwohl die einander gegenüberliegenden Stirnflächen der Schienen 10, 12 üblicherweise eben sind, kann es vorkommen, daß eine oder beide dieser Stirnflächen eine leichte Rundung aufweisen. Dieser Fall ist in Fig. 9 schematisch dargestellt, wobei es dann zu einem Spalt e zwischen der Platte P und der Stirnfläche der Schiene 10 kommt. Zweckmäßig sollte der Durchmesser d der Elektrode 260, der in der Praxis ca. 1,6 mm beträgt, größer sein als die Breite des entstandenen Spalts e, so daß der von der Elektrode 260 erzeugte Lichtbogen nicht nach unten durch den Spalt hindurch bis zu dem Isolationselement 154 durchschlägt. Selbst in einem solchen Fall jedoch ist ein zuverlässiger Kontakt zwischen der Schiene bzw. den Schienen zur Erdung der Platte P sichergestellt, so daß ein gleichmäßig brennender Lichtbogen und somit eine gleichmäßige Schweißnaht erzielbar ist. Je schmaler der Spalt e ist, desto besser ist die Barriere, die die Sperrplatte P zwischen dem Lichtbogen C und dem Unterbau unterhalb des Spaltes G bildet.

Eine etwas andere Ausgestaltung ist in Fig. 12 dargestellt, in der der untere Support-Block 150 eine Endplatte 300 aufweist, die neben den seitlichen Enden der Sockelbereiche 40, 40a der Schienen aufragt. Ein in den Block eingelegtes Isolationsgewebe oder eine keramische Schicht 154 ist ebenfalls mit seitlich neben den Endplatten 300 aufragenden Teilstücken 154a versehen, die eine äußere Abgrenzung für geschmolzenes Füllmetall bilden, das in den unteren Bereich des Spaltes G eingebracht wird, bevor die Schalungsschuhe 100, 110 zum Verschweißen des Stegbereiches und des Kopfteils des Spaltes G zusammengeschoben werden.

Mit dem weiter oben beschriebenen Verfahren kommt es nicht zu Schlackeablagerungen bei dem in den Spalt g eingebrachten Elektrodenmaterial. Es wird ein Schutzgasschweißverfahren zur Anwendung gebracht, wobei zwischen dem Sprühmodus und dem Impulsmodus hin- und hergeschaltet werden kann, indem verschiedene Stromversorgungen eingesetzt werden, die für das Schweißen zur Verfügung stehen. Es hat sich gezeigt, daß mit diesem Schweißverfahren eine sichere Schweißnaht hergestellt werden kann, deren Ausfälle so gering sind, daß das Verfahren eine echte Konkurrenz zu dem Abbrennschweißen darstellt. Die Sperrplatte P wird mit eingeschweißt und stellt damit ein Teil der Schweißverbindung im Wurzelbereich des Spaltes g dar. Das Legierungsmaterial muß nicht bereits in der Platte P enthalten sein, da die Legierungsbestandteile im Kern der Metallkernelektrode vorhanden sind.

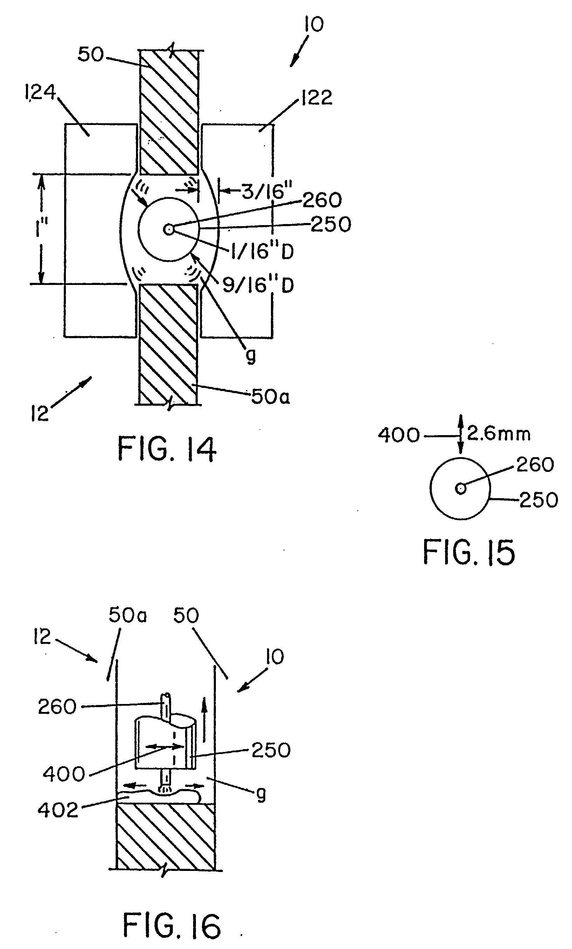

Anhand der Fig. 14 bis 23 sollen nachfolgend weitere Vorteile der Erfindung erläutert werden, bei der der Spalt zwischen den Eisenbahnschienen ebenfalls mit geschmolzenem Stahl von einer im Schutzgasschweißverfahren aufgeschmolzenen Metallelektrode ausgefüllt wird, wobei im Kopfbereich der Schienen die Schweißraupen nach einem besonderen Schema gelegt werden, wodurch die Festigkeit der Schweißnaht im Spaltbereich zwischen den Kopfteilen optimiert wird und wodurch eine Schweißnahtverstärkung in den beiden einander gegenüberliegenden Seitenbereichen der Schienenköpfe erfolgt. In diesen Fig. werden für entsprechende Komponenten dieselben Bezugszeichen verwendet wie bei den vorgehend beschriebenen Fig. 1 bis 13. Die Fig. 14 bis 16 zeigen in etwas vereinfachter Darstellung das Verhältnis der Abmessungen zwischen der Schweißpistole 250, dem Spalt g und den Kupferschuhen 120 und 124 im Bereich der Stege 50 und 50a der Schienen 10 und 12 beim Verschweißen, das nachfolgend im Detail beschrieben wird. Wie aus diesen Fig. ersichtlich ist, wird die Schweißpistole 250 und damit die Schweißelektrode 260 im Spalt g quer zur Längsrichtung der Schienen 10 und 12 bewegt, wobei die Bewegung seitlich durch die Schalungsschuhe 122 und 124 seitlich begrenzt wird. Gleichzeitig wird die Schweißpistole und damit die Elektrode auch in Längsrichtung des Spaltes G hin- und herbewegt, wie dies durch den Doppelpfeil 400 in Fig. 15 und 16 angedeutet wird. Bei dem dargestellten Ausführungsbeispiel beträgt die Spaltbreite etwa 25 mm, während der Durchmesser der Schweißpistole 250 etwa 14 mm beträgt. Die Schweißpistole kann nach beiden Seiten von der in Fig. 14 dargestellten zentralen Position um etwa 1,3 mm, also insgesamt um 2,6 mm verrückt werden. Wie sich insbesondere aus Fig. 16 ergibt, ist es schon durch die geringe Verschiebebewegung der Schweißpistole 250 bzw. der Elektrode 260 möglich, das geschmolzene Füllmaterial 402 der Elektrode 260 vollständig zwischen die beiden einander gegenüberliegenden Stirnseiten der Stege 50 und 50a der Schienen zu bringen.

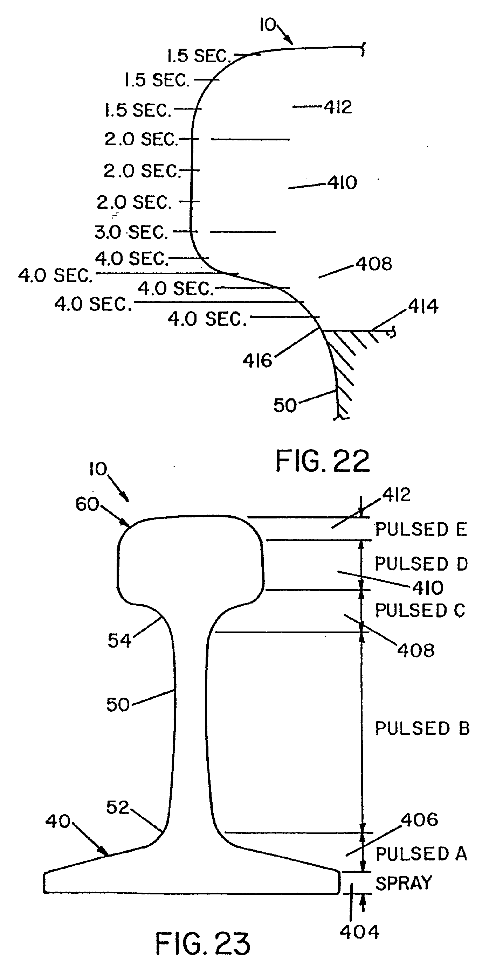

Aus der schematischen Darstellung der Schiene 10 in Fig. 23 ist ersichtlich, daß das Basisteil der Schiene im wesentlichen aus dem unteren Sockelbereich 404, dem oberen Sockelbereich 406 und dem Steg 50 sowie einem den Steg mit dem oberen Sokkelbereich verbindenden Übergangsbereich 406 besteht, während der Kopfbereich der Schiene einen oberen, ausgerundeten Übergangsbereich 54 bzw. 408 zwischen dem Steg 50 und einem Mittelteil 410 aufweist, das oben in einen Scheitelbereich 412 übergeht. Demgemäß weist auch der zwischen den Schienen auszufüllende Spalt entsprechende Doppel-, Steg- und Kopfbereiche auf. Wie sich aus Fig. 23 weiter ergibt, wird das Sprühlichtbogenschweißverfahren bei dieser Ausführungsform lediglich im unteren Wurzelbereich bei den ersten Schweißlagen zwischen den unteren Sockelbereich 404 der Schienenbasis angewandt, wozu die Elektrode quer durch den Spalt bewegt wird, während sie sich in Längsrichtung der Schiene hin- und herbewegt. Wie dies zuvor im Zusammenhang mit der in den Fig. 1 bis 13 dargestellten Ausführungsform beschrieben wurde, erlaubt das Sprühschweißverfahren in vorteilhafter Ausgestaltung der Erfindung einen guten Einbrand und guten Wärmeeintrag in einem großen Bereich des Schienensockelteils. Nach Herstellung der ersten oder Wurzellage wird die Schweißvorrichtung auf den Impulsschweißmodus umgestellt und es werden weitere Lagen geschweißt, indem die Schweißpistole quer durch den Spalt bewegt wird, während die gleichzeitig in Längsrichtung der Schiene oszilliert. Dabei wird der Spalt im oberen Sockelbereich 406 geschlossen. Wie dies zuvor bereits in Verbindung mit den Fig. 1 bis 13 beschrieben wurde, werden die an die Kontur der Schiene angepassten Kupferschuhe verwendet, um den Spalt seitlich zu verschließen, wenn die geschweißten Materialschichten die Höhe der Stege der benachbarten Schienen erreichen. Der Spalt zwischen den Stegen wird dann - wie aus Fig. 23 ersichtlich - durch Schutzgasschweißen im Impulsverfahren ausgefüllt.

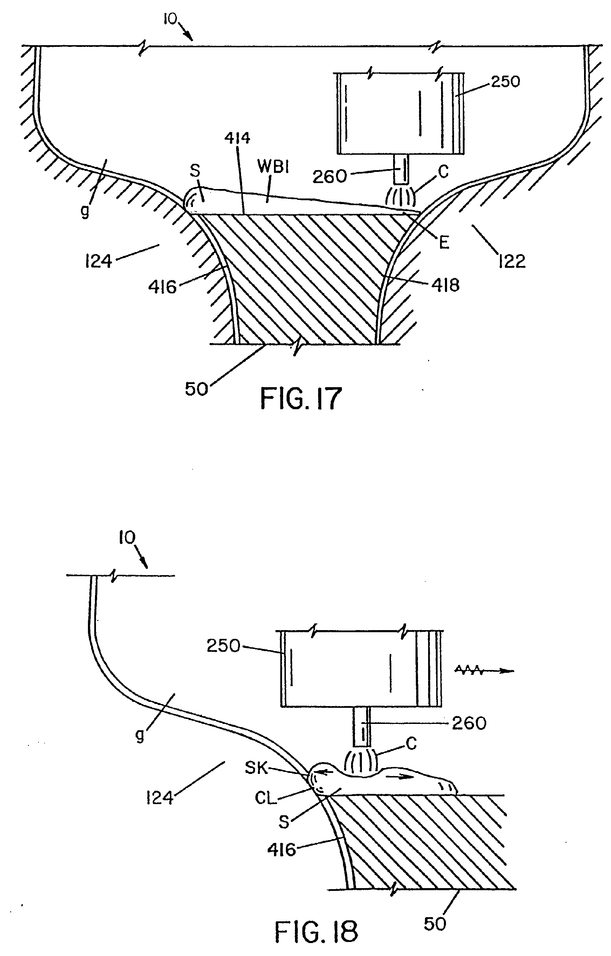

Bei dem bislang beschriebenen Schweißverfahren wird die Schweißpistole und die Elektrode im Spalt zwischen den oberen Sockelteilen und den Stegen der Schienen mit gleichbleibender Geschwindigkeit in Querrichtung bewegt, wodurch die nacheinander gelegten Schweißraupen eine im wesentlichen gleiche vertikale Dicke am Anfangs- und Endpunkt aufweisen. Nach der bevorzugten Ausführungsform wird auch bei Erreichen des oberen Endes der Schienenstege im Bereich der oberen Übergangsteile zu den Schienenköpfen das Impulsschweißverfahren weiterhin angewendet, jedoch wird die Art und Weise, in der die Schweißraupen gelegt werden, modifiziert. Wie sich insbesondere aus den Fig. 17 bis 21 ergibt, werden die Schweißraupen im Spalt zwischen den Kopfteilen der Schienen so gelegt, daß alle nacheinander geschweißten Schweißraupen in ihrem Anfangsbereich eine größere vertikale Dicke haben als an ihrem Endbereich und seitlich über die jeweiligen Seitenflächen des Kopfes vorragen, wobei der Anfang einer Schweißraupe einer zweiten Schweißlage über den dünneren Endteilen der darunterliegenden ersten Schweißlage angeordnet ist.

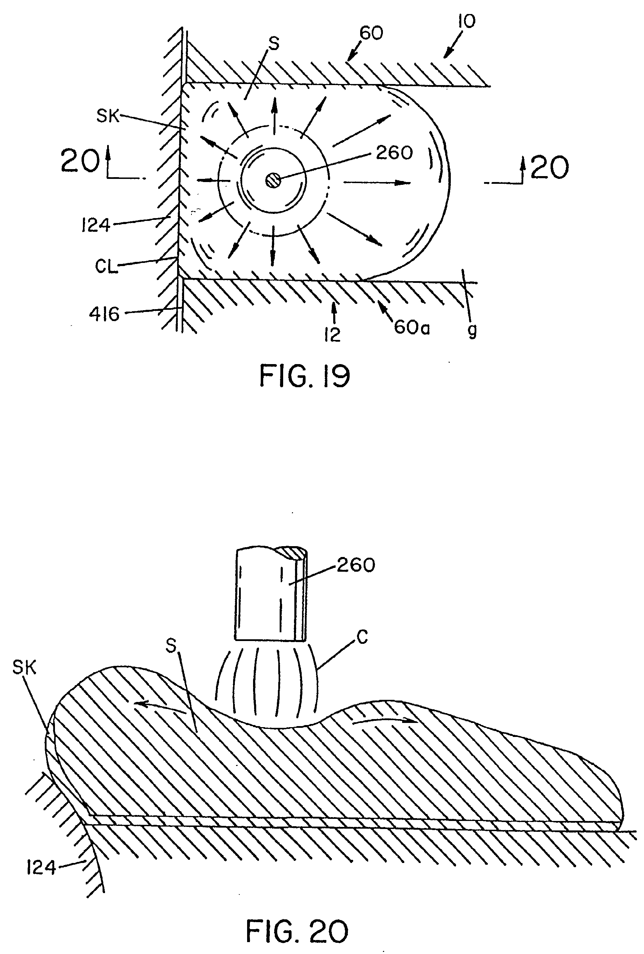

Um dies näher zu erläutern, wird Bezug genommen auf Fig. 17, in der mit dem Bezugszeichen 414 die Oberseite der letzten Schweißlage im Spalt zwischen den Schienenstegen bezeichnet ist. Auf der Oberseite 414 dieser letzten "Steglage" wird eine erste Schweißraupe WB1 im Spalt zwischen den Übergangsbereichen der Schienenköpfe in einer Richtung quer zur Längsrichtung der Schienen geschweißt, deren Anfangspunkt S und Endpunkt E in der Nähe der seitlichen Spaltöffnungen 416 und 418 liegen. Die Schweißnaht WB1 ist an ihrem Anfang S in Vertikalrichtung dicker als an ihrem Endpunkt E und hat - wie in Fig. 18 erkennbar - einen äußeren, vorkragenden Endbereich CL, der über die seitlichen Kanten der Schienenstirnseiten vorragt. Die Art und Weise, wie das beschriebene und dargestellte Profil der Schweißnaht und das vorragende Ende erzeugt werden, kann am besten anhand der Fig. 18 bis 20 in Verbindung mit Fig. 17 erläutert werden. Wie in Fig. 18 dargestellt ist, wird die Schweißpistole 250 mit der Elektrode 260 anfänglich in der Nähe der Kante 416 am Anfangspunkt der Schweißnaht positioniert und dann nachfolgend nach rechts in Fig. 18 zur Kante 418 hin bewegt. Dabei wird bei dieser Ausgestaltung des erfindungsgemäßen Verfahrens die Schweißpistole und Elektrode zu Beginn des Legens der Schweißnaht für eine vorher festgelegte Zeitdauer verzögert oder festgehalten, wobei die von dem Lichtbogen C erzeugten Kräfte das geschmolzene Metall seitlich und in Längsrichtung vom Anfangspunkt hin wegdrücken und so den Spalt ausfüllen, wie dies in Fig. 19 dargestellt ist. Während das Schweißmetall in der vorgeschriebenen Weise auseinandergetrieben wird, ist es wichtig, darauf zu achten, daß es nicht zu einem Kontakt des Schweißbogens mit den Schalungsschuhen aus Kupfer kommt und daß das geschmolzene Metall, das mit dem Schalungsschuh 124 in Fig. 17 bis 20 kommt, eine Haut SK am Anfangsbereich der Schweißraupe bildet.

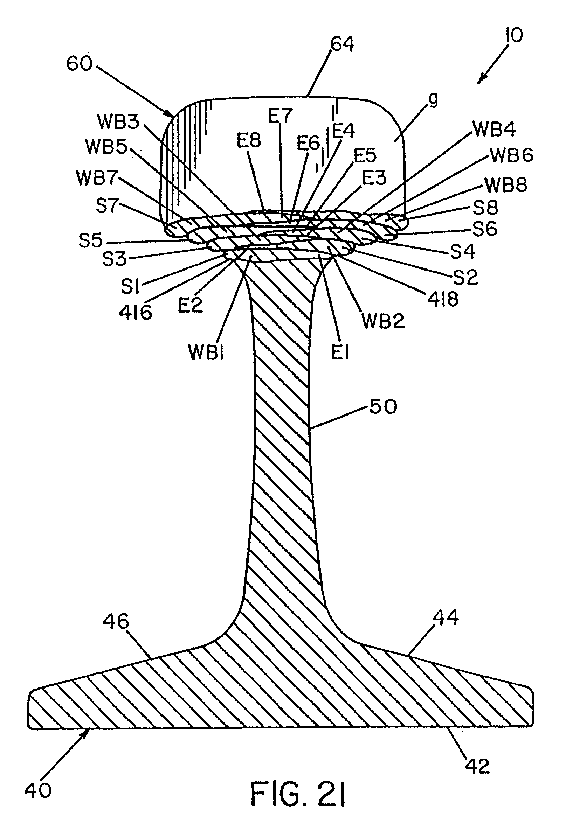

Nach Ablauf der vorbestimmten Haltezeit für die Schweißpistole bzw. Elektrode am Anfangspunkt der Schweißnaht werden diese ausgehend von dem in Fig. 18 am besten ersichtlichen Startpunkt zum Endpunkt (Fig. 17) mit einer vorgegebenen Geschwindigkeit bewegt, so daß - unter Berücksichtigung der Verzögerung beim Schweißstart - die Schweißnaht einen abnehmenden Querschnitt erhält und am Endbereich E dünner ist als am Startpunkt S. Aus der vorgehenden Beschreibung und insbesondere aus Fig. 21 ist ersichtlich, daß der Endpunkt E einer ersten Schweißraupe WB1 die Position für den Anfangspunkt der nächstdarüberliegenden, zweiten Schweißraupe WB2 festlegt. Die Schweißpistole und damit auch die Elektrode werden in Längsrichtung der Schienen im Spalt hin- und herbewegt, während sie sich vom Startpunkt zum Endpunkt bewegen, wobei bei Erreichen der letztgenannten Position die Oszillationsbewegung gestoppt wird. Die Schweißpistole 250 und Schweißelektrode 260 werden wieder für einen vorher festgelegten Zeitraum beim Startpunkt der zweiten Schweißnaht festgehalten, wie dies zuvor im Zusammenhang mit der ersten Schweißnaht WB1 beschrieben wurde, wodurch sich geschmolzenes Elektrodenmaterial am Anfangspunkt der zweiten Schweißraupe ausbreitet und so auch auf dieser Seite ein entsprechend vorragendes Ende CL bildet, das seitlich über die Kante 418 nach Fig. 21 vorspringt. Nach diesem "Auf-der-Stelle-Schweißen" wird die Schweißvorrichtung unter Oszillationsbewegungen in Richtung auf die Kante 416 bis etwa zum Anfangspunkt der ersten Schweißraupe WB1 mit festgelegter Geschwindigkeit bewegt, wobei durch die letztgenannte Bewegung zusammen mit dem "Auf-der-Stelle-Schweißen am Anfangspunkt der Schweißnaht diese wiederum ein Profil erhält, das an seinem Anfangspunkt S2 dicker ist als an seinem Endpunkt E2.

Im Laufe des Verschweißens des Spaltes g im Übergangsbereich gelangt die Schweißpistole nach einer gewissen Anzahl von übereinandergelegten Schweißlagen seitlich bis an die Schalungsschuhe 122,124 heran, wie dies leicht anhand der Fig. 17 und 18 vorstellbar ist. In dieser Höhenlage liegen die Endbereiche der gelegten Schweißraupen etwa in der Gleismitte und überlappen einander seitlich, wie dies am besten in Fig. 21 erkennbar ist. Die Schweißraupen greifen also in diesem Bereich mit ihren flacheren Endteilen praktisch ineinander, während durch das "Auf-der-Stelle-Schweißen eine Verteilung des geschmolzenen Metalls wie zuvor beschrieben erreicht wird und es zu dem gewünschten Schweißnahtprofil und der vorkragenden Ausgestaltung an den gegenüberliegenden Spaltseiten 416 und 418 kommt. Obwohl dies in Fig. 21 nicht dargestellt ist, wird der gesamte Spalt im Bereich der Schienenköpfe kontinuierlich in der beschriebenen Art und Weise ausgefüllt, indem die Elektrode in quer entgegengesetzten Richtungen nacheinander durch den Kopfspalt in der vorbeschriebenen Arbeitsweise hindurchgeführt wird. Wie man in Fig. 21 gut erkennen kann, ragen die Anfangspunkte der Schweißnähte im Übergangsbereich an den einander gegenüberliegenden Seiten des Spaltes über das jeweils darunterliegende, erste Ende einer darunterliegenden Schweißnaht vor und bilden so wiederum eine sehr gute Unterlage für die darauf geschweißte Schweißnaht, so daß die Festigkeit der geschweißten Verfüllung des Spaltes entlang der Seitenflächen zu beiden Seiten der Schienen im Übergangsbereich zu den Schienenköpfen hin besonders groß ist. In gleicher Weise bilden auch die vertikal übereinanderliegenden, ersten Enden der Schweißnähte im Mittel- und Scheitelbereich des Spaltes zwischen den Schienenköpfen wie auch im Übergangsbereich zwischen diesen beiden Zonen eine Schweißverstärkung an den seitlich einander gegenüberliegenden Seitenflächen der Schienen und optimieren damit die Festigkeit der Verschweißung zwischen den Kopfbereichen von zwei benachbarten Schienen.

Die Haltezeit, während der die Elektrode zu Beginn einer Schweißnaht an Ort und Stelle gehalten wird, kann zwischen 1 und 10 Sekunden liegen und beträgt vorzugsweise etwa 1,5 bis 4 Sekunden, wobei es auch bevorzugte Geschwindigkeiten für die Bewegung der Elektrode entlang der zu schweißenden Raupe sowie Zufuhrraten für den Schweißdraht gibt. In Fig. 22 sind bevorzugt zum Einsatz kommende Haltezeiten am Übergangs-, Zentralund Scheitelbereich des Spaltes zwischen den zu verschweißenden Schienen dargestellt. Danach beträgt die Haltezeit für Schweißnähte, die im Spalt zwischen den Übergangsbereichen der Schienen gelegt werden, etwa 4 Sekunden, und zwar bis zu einer Höhe, in der die Übergangszone in den Zentralbereich des Schienenkopfes übergeht, wo die Haltezeit sich auf vorzugsweise 3 Sekunden verringert. Die 4-sekündige Haltezeit gestattet es, daß das geschmolzene Metall die Ausnehmung zwischen den Schweißschuhen und den Schienenkanten vollständig ausfüllt und auch noch seitlich über die Schienenseitenflächen vorragt, wie dies zuvor in Verbindung mit den Fig. 17 bis 21 beschrieben wurde.
Wenn die geschweißten Schichten im Spalt eine Höhe erreicht haben, die dem Zentralbereich des Schienenkopfes entspricht, wird die Haltezeit auf 2 Sekunden reduziert, da die durch die vorhergehende Schweißoperation im Spalt zwischen den Übergangsbereichen der Schienen eingebrachte Wärme die Verbindung des Schweißmetalls mit den Schienenköpfen zunehmend erleichtert, so daß die Haltezeit an den Anfangspunkten der Schweißraupen im Zentralbereich verringert werden kann, ohne die Schweißnahtgüte negativ zu beeinflussen. Aus demselben Grund wird die Haltezeit für die im Scheitelbereich der Schienen in dem Spalt zu schweißenden Schweißnähte auf 1,5 Sekunden reduziert. Selbstverständlich gelten die in Fig. 22 angegebenen Haltezeiten an den Anfangsbereichen der von links nach rechts geschweißten Schweißraupen genau so wie für die in Gegenrichtung gelegten Schweißnähte, die in Fig. 22 nicht dargestellt sind.

Neben den oben erwähnten, bevorzugten Verzögerungszeiten, die beim Ausfüllen der Schienenspalte im Übergangs-, Zentral- und Scheitelbereich zwischen den Schienen zur Anwendung kommen, ist es besonders vorteilhaft, die Elektrode nach der Haltezeit im Spalt im Bereich des Übergangsteils mit einer Geschwindigkeit von etwa 0,1 m/min zu verfahren, während die Drahtzufuhrgeschwindigkeit für die Elektrode bei etwa 6,1 m/min liegt. Diese Geschwindigkeit und Zufuhrrate ermöglichen es, die Form der Schweißraupe im Übergangsbereich zu kontrollieren und gleichzeitig trotzdem eine hohe Schweißgeschwindigkeit und Schweißnahtqualität zu erzielen. Im Spalt zwischen den Zentralbereichen 410 der Schienenköpfe liegt die bevorzugte Schweißgeschwindigkeit bei etwa 0,14 m/min, während die Zufuhrrate für den Schweißdraht ebenfalls etwa 6,1 m/min beträgt. Durch die höhere Bewegungsgeschwindigkeit der Elektrode beim Ausfüllen des Spaltes zwischen den Zentralbereichen der Schienenköpfe wird der Spalt wirksam ausgefüllt, während die Schweißabkühlgeschwindigkeit und das Schweißgefüge kontrolliert werden kann. Beim Ausschweißen des Spaltes zwischen den Scheitelbereichen der Schienenköpfe, auf denen die Räder der Schienenfahrzeuge abrollen, soll vorsichtig gearbeitet werden, um die erwünschte Schweißnahthärte zu erhalten und höchste Qualität zu gewährleisten. Unter Berücksichtigung der oben bereits erwähnten, 1,5-sekündigen Haltezeit werden die Schweißnähte im Spalt zwischen den Scheitelbereichen der Schienen mit reduzierter Zufuhrrate des Schweißdrahtes von 5,33 m/min, jedoch einer höheren Geschwindigkeit der Schweißelektrode selbst von 0,152 m/min gelegt. Durch diese Schweißgeschwindigkeit und Zufuhrrate des Schweißdrahtes wird eine geringere Schweißwärmemenge in die Schweißnaht im Scheitelbereich eingebracht, was wiederum dazu beiträgt, daß die Härte in den Schienenkopf-Scheitelbereichen das erwünschte Niveau erreicht.

Wie bereits oben erwähnt, wird der untere Teil 404 des Schienensockels 40 vorzugsweise im Sprühlichtbogenschweißverfahren ausgefüllt, wobei der Spalt unten mit einer bereits im Zusammenhang mit der Ausführungsform nach Fig. 1 bis 13 beschriebenen Sperrplatte begrenzt ist. Der direkte, gleichmäßige und gut eindringende Lichtbogen, der beim Sprüh-Schutzgasschweißen erzeugt wird, schmilzt die bodenseitigen Ecken des Schienensockels in vorteilhafter Weise auf und sorgt somit für eine hervorragende Verbindung mit der Sperrplatte. Der Spalt im oberen Bereich 406 der Schienensockel wird im Impulslichtbogenschweißverfahren geschlossen, wobei die Schweißelektrode vorzugsweise im Spalt mit einer Schweißgeschwindigkeit von 0,15 m/min und mit einer Schweißdrahtzufuhrrate von 6,1 m/min vor- und zurückbewegt wird, was eine gute Produktivität bei ebenfalls guter Schweißnahtformüberwachung gestattet. Wie bereits oben erwähnt, ist der Spalt im Stegbereich zwischen den Schienen durch die Kupferschuhe seitlich begrenzt und dieser Spaltteil wird vorzugsweise unter einer Schweißdraht-Zufuhrrate von 10,1 m/min ausgefüllt. Diese Zufuhrrate erleichtert es, den Spalt im Stegbereich so schnell wie möglich auszufüllen, wobei das bei dieser Ausführungsform auch in diesem Bereich zur Verwendung kommende Impulsschweißverfahren das schnelle Schweißen gestattet, ohne daß dadurch die Qualität der Schweißnaht leiden würde.

Die Erfindung ist nicht auf die dargestellten und beschriebenen Ausführungsbeispiele beschränkt, sondern es ergeben sich eine Vielzahl von Änderungen und Ergänzungsmöglichkeiten, ohne den Rahmen der Erfindung zu verlassen. Insoweit soll die vorgehende Beschreibung lediglich zur Erläuterung und nicht zur Beschränkung der Erfindung verstanden werden.

## Patentansprüche

1. Verfahren zum Verschweißen von Schienen für Schienenfahrzeuge im Bereich der Schienenkopfteile (60,60a), die an den Schienen oberhalb von aufragenden Stegen (50, 50a) und darunterliegenden Sockelteilen (40,40a) ausgebildet sind, wobei die Schienen im Abstand voneinander unter Bildung eines Spaltes (g) zwischen ihren Stirnflächen eingebaut sind, **dadurch gekennzeichnet, daß** nach dem Ausfüllen des Spaltes (g) im Sockel- und im Stegbereich mittels einer im Schutzgasschweißverfahren aufgeschmolzenen Schweißelektrode der Spalt im Kopfbereich geschlossen wird, indem die Elektrode kontinuierlich nacheinander in entgegengesetzten Richtungen quer zur Längsrichtung der Schienen (10,12) im Spalt zur Bildung von Schweißraupen (WB) bewegt wird, deren Anfangs- und Endpunkte (S bzw. E) die beiden entgegengesetzten Richtungen definieren, wobei die Bewegung der Elektrode am Anfangspunkt (S1, S2...) einer jeden Schweißraupe (WB1, WB2...) für einen bestimmten Haltezeitraum unterbrochen wird.

2. Verfahren nach Anspruch 1, **dadurch gekennzeichnet, daß** der Haltezeitraum etwa 1 bis 10 Sek beträgt und vorzugsweise im Bereich zwischen 1,5 und 4 Sek liegt.

3. Verfahren nach Anspruch 1 oder 2, **dadurch gekennzeichnet, daß** die Elektrode (260) beim Erzeugen der Schweißraupen (WB) in Längsrichtung der Schienen oszilliert wird.

4. Verfahren nach einem der Ansprüche 1 bis 3, wobei der Kopfteil im wesentlichen aus einem Mittelteil (410), einem Übergangsteil (408) zwischen Stegteil (50) und Mittelteil (410) und einem oberen Scheitelteil (412) besteht, **dadurch gekennzeichnet, daß** die Haltezeiträume für die im Übergangsteilbereich (408), im Mittelteilbereich (410) und im Scheitelteilbereich (412) geschweißte Schweißraupen unterschiedlich gewählt werden.

5. Verfahren nach Anspruch 4, **dadurch gekennzeichnet, daß** die Haltezeiträume ausgehend vom Übergangsbereich in Richtung zum Scheitelbereich hin kürzer werden und vorzugsweise von 4 auf 1,5 Sek abnehmen.

6. Verfahren nach einem der Ansprüche 4 oder 5, **dadurch gekennzeichnet, daß** die Haltezeiträume im Übergangsbereich etwa 4 Sek, im Mittelteilbereich etwa 2 Sek und im Scheitelbereich etwa 1,5 Sek betragen.

7. Verfahren nach einem der Ansprüche 1 bis 6, **dadurch gekennzeichnet, daß** der Haltezeitraum beim Übergang vom Übergangsteilbereich (408) zum Mittelteilbereich (410) etwa 3 Sek beträgt.

8. Verfahren nach einem der Ansprüche 1 bis 7, **dadurch gekennzeichnet, daß** die Elektrode (260) mit einer Geschwindigkeit von etwa 0,1 bis 0,16 m/min quer zur Längsrichtung der Schienen (10,12) durch den Spalt (g) bewegt wird.

9. Verfahren nach einem der Ansprüche 4 bis 8, **dadurch gekennzeichnet, daß** die Geschwindigkeit der Elektrode (260) in Querrichtung im Übergangsteilbereich, Mittelteilbereich und Scheitelteilbereich des Schienenkopfes veränderlich ist und vorzugsweise vom Übergangsteilbereich (408) zum Scheitelteilbereich (412) hin zunimmt.

10. Verfahren nach Anspruch 9, **dadurch gekennzeichnet, daß** die Geschwindigkeit der Elektrode in Querrichtung durch den Spalt im Übergangsbereich (408) etwa 0,1 m/min, im Mittelteilbereich etwa 0,14 m/min und im Scheitel-teilbereich etwa 0,15 m/min beträgt.

11. Verfahren nach einem der Ansprüche 1 bis 10, **dadurch gekennzeichnet, daß** die Schweißelektrode (260) ein Elektrodendraht ist und mit einer Zufuhrgeschwindigkeit von 5,3 bis 10,2 m/min zugeführt wird.

12. Verfahren nach einem der Ansprüche 1 bis 11, **dadurch gekennzeichnet, daß** die Zufuhrgeschwindigkeit der Elektrode im Übergangsteilbereich, Mittelteilbereich und Scheitelteilbereich der Kopfteile (60,60a) unterschiedlich gewählt wird und vorzugsweise im Übergangsteilbereich und Mittelteilbereich etwa 6,1 m/min und im Scheitelteilbereich etwa 5,3 m/min beträgt.

13. Verfahren nach einem der Ansprüche 1 bis 12, **dadurch gekennzeichnet, daß** der Sockelbereich (40) im wesentlichen aus einem unteren Sockelteilbereich (404) und einem oberen Sockelteilbereich (406) am Übergang zum Stegbereich (50) besteht und daß der Spalt (g) im unteren Sockelteilbereich (404) im Sprühlichtbogenschweißverfahren in mehreren Durchgängen mit geschmolzenem Metall ausgefüllt wird und daß der Spalt im oberen Sockelteilbereich (406), im Stegbereich (50) und im Kopfbereich (60) der Schienen im Impulslichtbogenschweißverfahren mit Elektrodenmetall ausgefüllt wird.

14. Verfahren nach einem der Ansprüche 1 bis 13, **dadurch gekennzeichnet, daß** die Zufuhrgeschwindigkeit des Elektrodendrahtes (260) im oberen Sockelteilbereich (406) etwa 6,1 m/min beträgt und/oder daß die Zufuhrgeschwindigkeit des Elektrodendrahtes (260) im Stegbereich (50) etwa 10,2 m/min beträgt.
